# EUROPÄISCHE PATENTSCHRIFT

(11) **EP 0 826 262 B1**
(45) Veröffentlichungstag und Bekanntmachung des Hinweises auf die Patenterteilung: **11.08.1999**
(21) Anmeldenummer: 96914057.3
(22) Anmeldetag: 09.05.1996
(51) Int. Cl.: H02K 5/24, H02K 5/16

(54) **GERÄUSCHARMER ELEKTROMOTOR, INSBESONDERE KOMMUTATORMOTOR**
LOW-NOISE ELECTRIC MOTOR, ESPECIALLY COMMUTATOR MOTOR
MOTEUR ELECTRIQUE SILENCIEUX, NOTAMMENT MOTEUR ELECTRIQUE A COLLECTEUR

(30) Priorität: 19.05.1995 DE 29508398 U; 27.07.1995 DE 29512143 U
(43) Veröffentlichungstag der Anmeldung: 04.03.1998
(73) Patentinhaber: SIEMENS AKTIENGESELLSCHAFT, 80333 München (DE)
(72) Erfinder: DREXLMAIER, Thomas, D-97076 Würzburg (DE); GÖB, Werner, D-97273 Kürnach (DE); KRÄMER, Ralf, D-97256 Geroldshausen (DE); PIECZKOWSKI, Peter, D-97076 Würzburg (DE); ROHM, Hans, D-97076 Würzburg (DE); RÖCHNER, Burkard, D-97076 Würzburg (DE)
(86) Internationale Anmeldenummer: DE9600801
(87) Internationale Veröffentlichungsnummer: WO9637031

(56) Entgegenhaltungen:
- DE-A- 3 830 386
- DE-B- 1 066 274
- DE-B- 1 181 307
- DE-B- 1 280 385
- FR-A- 1 320 919
- GB-A- 2 169 754
- US-A- 3 546 504
- US-A- 3 717 779

## Beschreibung

Die Erfindung bezieht sich auf einen geräuscharmen Elektromotor, insbesondere Kommutatormotor, gemäß Patentanspruch 1. Geräuscharme Elektromotore mit einem Geräusch-Dämpfungsteil zwischen einem Lager für den Rotor einerseits und einer Lagerschild-Aufnahme andererseits sind z.B. durch die FR-A-1 320 919 bzw. DE-A-38 30 386 bzw. DE-A1-37 07 600 bekannt.

In sämtlichen vorgenannten bekannten Fällen wird ausgehend von einem einteiligen Lagerschild ein Geräusch-Dämpfungsteil als Lagerteil vorgesehen, wobei im Unterschied zur direkten Verbindung zwischen Geräusch-Dämpfungsteil und Lager gemäß der DE-A1-37 07 600 im Fall der FR-A-1 320 919 wegen des dortigen axial verschieblichen Los-Kugellagers zwischen dem Lager und dem Geräusch-Dämpfungsteil eine dünne Metall-Hülse und im Fall der DE-A-38 30 386 die Lageraufnahme zwischen dem eigentlichen Lager einerseits und dem Lagerschild andererseits nach Art einer Mehrstofflagerung aus einem inneren Lagerteil, vorzugsweise aus Stahl bzw. Aluminium, und einem äußeren Lagerteil, vorzugsweise aus einem elastomeren Material, besteht.

Der Erfindung liegt die Aufgabe zugrunde, bei einem Elektromotor der eingangs genannten Art trotz einfachster, für die Fertigung eines Massenproduktes geeigneter Weise die Übertragung rotorseitiger Geräusche auf den Stator bzw. das Motorgehäuse und damit auf das den Motor aufnehmende Bauteil, insbesondere ein Lüfteraggregat, vermeiden zu können. Die Lösung dieser Aufgabe gelingt durch die Lehre des Anspruchs 1; vorteilhafte Ausgestaltungen der Erfindung sind jeweils Gegenstand der Unteransprüche.

Die erfindungsgemäße Lösung erlaubt in vorteilhafter Weise die Verwendung handelsüblicher Lager bei montagetechnisch einfacher statorseitiger Aufnahme dieser Lager, insbesondere Kalottenlager, und bei wegen der in größerem radialen Abstand zu diesen Lagern angeordneten Geräusch-Dampfungsteilen maximaler Dämpfung ohne Gefahr von zu großen Fluchtungsfehlern aufgrund der aus einem Elastomer vorgefertigten, gegebenenfalls mit stärkeren Toleranzen behafteten, Geräusch-Dämpfungsteile; die Geräusch-Dämpfungsteile sind entgegen einer lagernahen Anordnung weniger wärmebelastet und können in auch für eine große Steifigkeit der gesamten Lagerhalterung vorteilhaften Weise großflächig ausgebildet werden, wobei durch die Zweiteilung der gegenseitig über die Dämpfungszwischenlage miteinander verbundenen Lagerbügelteile auch das Eigenschwingverhalten der Lagerbügel in geräuschmindernder Weise günstig beeinflußt werden kann und die topfartige Ausbildung der Lagerbügelteile deren gegenseitige Montage durch die erfindungsgemäße Stecktechnik in vorteilhafter Weise vereinfacht.

Die Erfindung sowie weitere vorteilhafte Ausgestaltungen der Erfindung gemäß Merkmalen der Unteransprüche werden im folgenden anhand in der Zeichnung schematisch dargestellter Ausführungsbeispiele näher erläutert; darin zeigen:
- FIG 1: in einem axialen Schnittbild einen Kommutatormotor mit beidstirnseitig zwischen Lagerbügelteilen angeordnetem Geräusch-Dämpfungsteil;
- FIG 2: in Explosionsdarstellung eine fertigungs- und montagetechnisch besonders vorteilhafte Weiterbildung der geräuschgedämpften Lagerung am kommutatorseitigen Ende des Kommutatormotors gemäß FIG 1;
- FIG 3: den statorseitigen Lagerbügelteil gemäß Schnitt III - III in FIG 2;
- FIG 4: die Lagerbügelteile gemäß FIG 2 nach ihrem gegenseitigen Ineinanderstecken und Verrasten;
- FIG 5: die axial stirnseitige Draufsicht auf einen kommutatorseitigen Lagerbügel gemäß FIG 1 mit an diesem schwenkbar gelagerten Hammerbürstenhaltern.

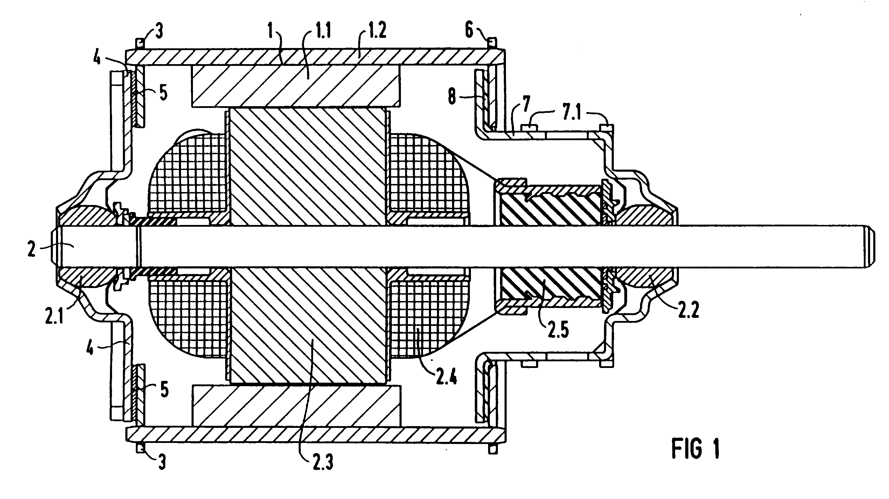

FIG 1 zeigt einen Kommutatormotor mit einem Stator-Motorgehäuse 1, an dessen Innenumfang Permanent-Erregermagnete 1.1 gehalten sind, und mit einer in beidseitigen Kalottenlagern 2.1 bzw.2.2 gelagerten Rotorwelle 2, auf der ein Rotorpaket 2.3 mit einer Rotorwicklung 2.4 gehalten ist, die an einen Kommutator 2.5 angeschlossen ist.

Zur Halterung der Kalottenlager 2.1 bzw.2.2 sind an beiden Stirnseiten des Motorgehäuses 1 Lagerbügel vorgesehen, die erfindungsgemäß aus jeweils einem ersten statorseitigen Lagerbügelteil 3 bzw.6 und einem zweiten lagerseitigen Lagerbügelteil 4 bzw.7 unter jeweiliger Zwischenlage eines Gerausch-Dämpfungsteils 5 bzw.8 miteinander verbunden sind; dazu übergreifen sich der jeweils erste statorseitige Lagerbügelteil und der jeweils zweite lagerseitige Lagerbügelteil mit einem vorzugsweise flächigen gegenseitigen Anlageteil, zwischen denen das ebenfalls im wesentlichen flächige Geräusch-Dämpfungsteil 5 bzw.8 derart angeordnet ist, daß sämtliche zur Befestigung bzw. gegenseitigen Abstützung dienenden Teile des jeweils ersten statorseitigen Lagerbügelteils 3 bzw.6 bzw. des jeweils zweiten lagerseitigen Lagerbügelteils 4 bzw.7 nur unter Zwischenlage des Geräusch-Dämfpungsteils 5 bzw.8 gegenseitig verbunden sind. Die Geräusch-Dämpfungsteile 5 bzw.8 bestehen vorzugsweise aus einem Elastomer. Die Lagerbugelteile bestehen bevorzugt entweder aus Kunststoff oder aus Metall.

Gemäß Ausführungsbeispiel nach FIG 1 ist das Geräusch-Dämpfungsteil 8 im wesentlichen radial flächig zwischen entsprechend flächigen Anlageteilen der Lagerbügelteile 6;8 anliegend befestigt.

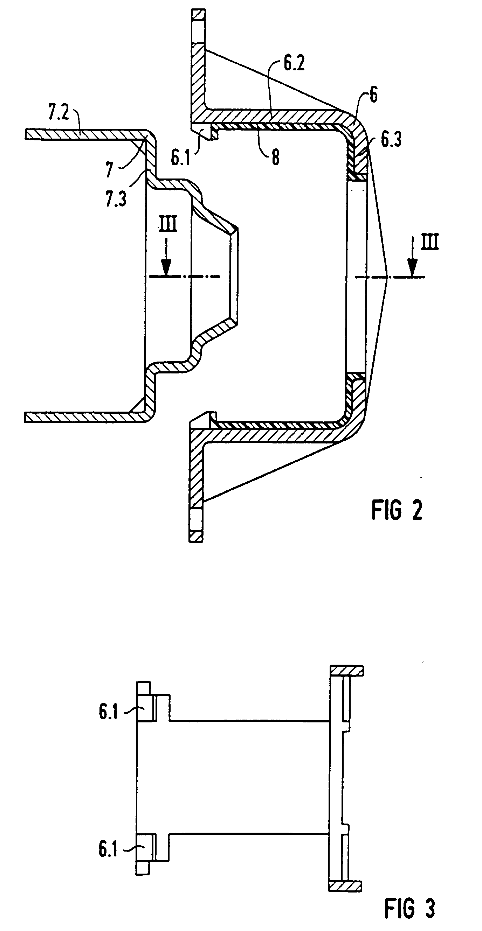

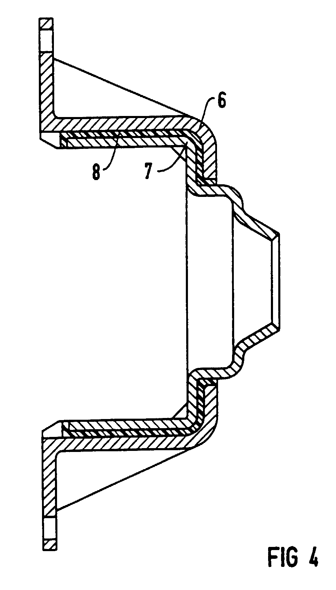

FIG 2 bis 4 zeigen eine insbesondere montagetechnisch vorteilhafte und trotzdem aufwandsarme geräuschgedämpfte Lagerung; dazu sind der hier nur dargestellte erste statorseitige Lagerbügelteil 6 und der zweite lagerseitige Lagerbügelteil 7 topfartig geformt und unter Zwischenlage des Geräusch-Dämpfungsteils 8 ineinandersteckbar und dabei gegenseitig verrastbar ausgebildet. Bei einem stegartigen Lagerbügel ergeben sich dabei anstelle eines umfangsseitig geschlossenen Topfmantels und stirnseitigen Topfbodens lediglich topfartig geformte Laschen; außerdem kann der Topfboden des ersten statorseitigen Lagerbügelteils 6 mit einer Mittelöffnung versehen sein, durch welche die in den Topfboden des zweiten lagerseitigen Lagerbügelteils 7 eingeformte Lageraufnahme für das Kalottenlager 2.2 im betriebsfertigen Montagezustand herausreicht.

Beim Ineinanderstecken können die beiden Lagerbugelteile 6 bzw. 7 aufgrund ihrer umfangsseitigen Anlageflächen 6.2 bzw. 7.2 und des relativ dünnwandigen, jedoch großflächigen zwischenliegenden Geräusch-Dämpfungsteils 8 im Sinne einer genauen Fluchtung zwischen Stator und Rotor geführt werden. Bei Erreichen ihrer betriebsmäßigen Endposition wird diese in der einen axialen und in tangentialer Richtung durch gegenseitige Verrastung gesichert; dazu rasten im vorliegenden Ausführungsbeispiel umfangsseitige Schnapphaken 6.1 an dem ersten statorseitigen Lagerbügelteil 6 hinter die freien, u.U. mit Einrastnasen versehenen, Stirnseitenenden des zweiten lagerseitigen Lagerbügelteils 7. In der anderen axialen Richtung erfolgt die axiale Lagesicherung durch die voreinander stoßenden stirnseitigen Anlageflächen 6.3 bzw. 7.3 der Lagerbugelteile bei wiederum Zwischenlage des Geräusch-Dämpfungsteils 8.

In vorteilhafter Weise ist, wie aus FIG 2 ersichtlich, der erste statorseitige Lagerbügelteil 6 zusammen mit dem Geräusch-Dämpfungsteil 8 als vorgefertigte Bauteileinheit ausgebildet; zweckmäßigerweise ist der zweite lagerseitige Lagerbügelteil 7 im Sinne einer maximalen Wärmeabfuhr aus Metall und der erste statorseitige Lagerbügelteil 6 im Sinne einer einfachen Formbarkeit und Verbindungsmöglichkeit mit dem Geräusch-Dämpfungsteil 8 aus Kunststoff ausgeführt.

Zur Befestigung des Geräusch-Dämpfungsteils 5 bzw.8 an den beidseitig anliegenden Lagerbügelteilen 3;6 bzw.4;7 sind nach Ausgestaltung der Erfindung insbesondere eine Klebe- bzw. eine Einknöpf- oder Rastverbindung vorgesehen. Weitere bevorzugte Befestigungsarten sind im Falle einer Metallausführung der Lagerbügelteile ein Anvulkanisieren und im Fall einer Kunststoffausführung der Lagerbügelteile ein Anspritzen des Geräusch-Dampfungsteils oder ein Anlösen und dadurch anschließendes Verkleben des Lagerbügelteils mit dem Geräusch-Dämpfungsteil.

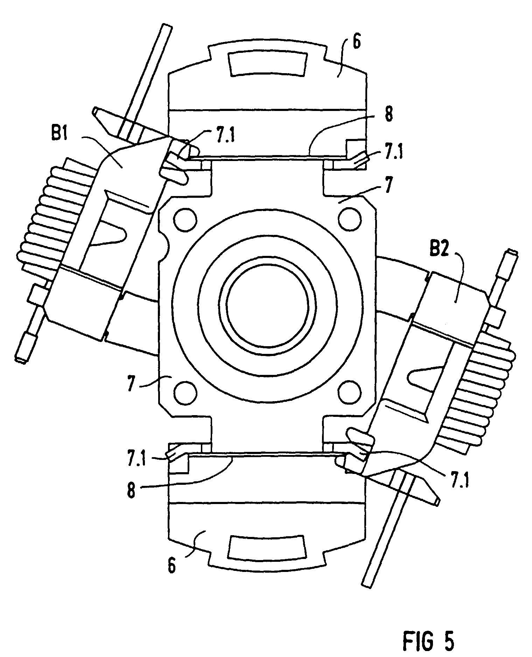

Zur Abdampfung von durch Bürsten B1;B2 entstehenden Geräuschen ist nach einer Ausgestaltung der Erfindung vorgesehen, die Bürsten B1;B2, die zur deutlicheren Darstellung der erfindungsgemäßen Lagerbügelausführung in FIG 1-3 weggelassen wurden und nur in der axialen Draufsicht auf den kommutatorseitigen Lagerbügel 6;7 in FIG 5 dargestellt sind, im lagerseitigen Lagerbügelteil 7 gehalten, insbesondere als Hammerbürstenhalter schwenkbar gelagert. Die schwenkbare Lagerung erfolgt nach Art einer Schneidenlagerung in einem dazu im wesentlichen axial verlaufenden Abschnitt des lagerseitigen Lagerbügelteils 7 zwischen axialen Anschlägen 7.1. Insbesondere bei einer Ausgestaltung gemäß FIG 2-4 wirkt sich die gesamte axiale geräuschdämpfende Abdeckung des Lagerbügels über die umfangsseitigen und stirnseitigen Anlageflächen 6.2;7.2 bzw. 6.3;7.3 für eine hohe Geräuscharmut des Kommutatormotors vorteilhaft aus.

## Patentansprüche

1. Geräuscharmer Elektromotor, insbesondere Kommutatormotor, mit zumindest einem Lagerbügel (3;4 bzw.6;7) oder dergleichen zwischen einem Stator einerseits und einem Lager, insbesondere einem Kalottenlager (9 bzw.10), für einen Rotor andererseits, wobei der Lagerbügel (3;4 bzw.6;7) zumindest in einen ersten statorseitigen Lagerbügelteil (3 bzw.6) und in einen zweiten lagerseitigen Lagerbügelteil (4 bzw.7) geteilt ist sowie der erste statorseitige Lagerbügelteil (3 bzw.6) bzw. der zweite lagerseitige Lagerbügelteil (4 bzw.7) jeweils mit einem topfartig ausgeformten Teil (6.2;6.3 bzw.7.2;7.3) unter Zwischenlage und gegenseitiger Anlage eines Geräusch-Dämpfungsteils (5 bzw.8) unter gegenseitiger Verrastung, insbesondere durch umfangseitige Schnapphaken (6.1), ineinandersteckbar ausgebildet sind.

2. Geräuscharmer Elektromotor nach zumindest einem der vorhergehenden Anspruch, wobei der erste statorseitige Lagerbügelteil (3 bzw.6) den zweiten lagerseitigen Lagerbügelteil (4 bzw.7) radial und axial außen zumindest teilweise übergreift.

3. Geräuscharmer Elektromotor nach zumindest einem der vorhergehenden Ansprüche, wobei das Geräusch-Dämpfungsteil (5 bzw.8) im Sinne einer vorfertigbaren Bauteileinheit mit dem ersten statorseitigen Lagerbügelteil (3 bzw.6) verbunden ist.

4. Geräuscharmer Elektromotor nach zumindest einem der vorhergehenden Ansprüche mit einem ersten statorseitigen Lagerbügelteil (3 bzw.6) aus Kunststoff bzw. einem zweiten lagerseitigen Lagerbügelteil (4 bzw.7) aus Metall.

5. Geräuscharmer Elektromotor nach zumindest einem der vorhergehenden Ansprüche mit Geräusch-Dämpfungsteilen (5 bzw.8) aus einem Elastomer, insbesondere einem Naturkautschuk, einem Silikon oder einen Etylenpolymer.

6. Geräuscharmer Elektromotor nach zumindest einem der vorhergehenden Ansprüche mit einer Einknöpf- bzw. Rastverbindung zwischen dem ersten statorseitigen Lagerbügelteil (3 bzw.6) bzw. dem zweiten lagerseitigen Lagerbügelteil (4 bzw.7) und dem Geräusch-Dämpfungsteil (5 bzw.8).

7. Geräuscharmer Elektromotor nach zumindest einem der vorhergehenden Ansprüche mit einer Klebeverbindung zwischen dem ersten statorseitigen Lagerbügelteil (3 bzw.6) bzw. dem zweiten lagerseitigen Lagerbügelteil (4 bzw.7) und dem Geräusch-Dämpfungsteil (5 bzw.8).

8. Geräuscharmer Elektromotor nach zumindest einem der vorhergehenden Ansprüche mit einer Vulkanisierverbindung zwischen dem ersten statorseitigen Lagerbügelteil (3 bzw.6) bzw. dem zweiten lagerseitigen Lagerbügelteil (4 bzw.7) und dem Geräusch-Dämpfungsteil (5 bzw.8).

9. Geräuscharmer Elektromotor nach zumindest einem der vorhergehenden Ansprüche mit einer Aufnahme der Kohlebürsten (B1;B2) im Bereich eines zweiten lagerseitigen geräuschgedampften Lagerbügelteils (7).

10. Geräuscharmer Elektromotor nach dem vorhergehenden Anspruch mit einer Aufnahme der Kohlebürsten (B1;B2) mittels Hammerbürstenhaltern im Bereich des zweiten lagerseitigen geräuschgedampften Lagerbügelteil (7).

## Claims

1. Low-noise electric motor, especially a commutator motor, having at least one bearing bracket (3; 4 and 6; 7) or the like between a stator on the one hand and a bearing, in particular a slotted-link bearing (9 or 10) for a rotor on the other hand, the bearing bracket (3; 4 or 6; 7) being split at least into a first bearing bracket part (3 or 6) on the stator side and into a second bearing bracket part (4 or 7) on the bearing side, and the first bearing bracket part (3 or 6) on the stator side and the second bearing bracket part (4 or 7) on the bearing side each being formed with a part (6.2; 6.3 or 7.2; 7.3), designed in the form of a pot, such that they can be plugged into one another with the interposition of, and making mutual contact with, a noise-damping part (5 or 8), and with mutual latching, in particular by snap-action hooks (6.1) on the circumference.

2. Low-noise electric motor according to Claim 1, in which the first bearing bracket part (3 or 6) on the stator side at least partially engages over the second bearing bracket part (4 or 7) on the bearing side, radially and axially on the outside.

3. Low-noise electric motor according to at least one of the preceding claims, in which the noise-damping part (5 or 8) is connected to the first bearing bracket part (3 or 6) on the stator side, in the sense of a prefabricated component unit.

4. Low-noise electric motor according to at least one of the preceding claims, having a first bearing bracket part (3 or 6) on the stator side, composed of plastic, and a second bearing bracket part (4 or 7) on the bearing side, composed of metal.

5. Low-noise electric motor according to at least one of the preceding claims having noise-damping parts (5 or 8) composed of an elastomer, in particular of a natural rubber, a silicone or an ethylene polymer.

6. Low-noise electric motor according to at least one of the preceding claims having a buttoned or latched joint between the first bearing bracket part (3 or 6) on the stator side as well as the second bearing bracket part (4 or 7) on the bearing side, and the noise-damping part (5 or 8).

7. Low-noise electric motor according to at least one of the preceding claims having a bonded joint between the first bearing bracket part (3 or 6) on the stator side as well as the second bearing bracket part (4 or 7) on the bearing side and the noise-damping part (5 or 8).

8. Low-noise electric motor according to at least one of the preceding claims having a vulcanized joint between the first bearing bracket part (3 or 6) on the stator side, as well as the second bearing bracket part (4 or 7) on the bearing side, and the noise-damping part (5 or 8).

9. Low-noise electric motor according to at least one of the preceding claims having a holder for the carbon brushes (B1; B2) in the region of a second noise-damped bearing bracket part (7) on the bearing side.

10. Low-noise electric motor according to the preceding claim having a holder for the carbon brushes (B1; B2) by means of hammer brush holders in the region of the second, noise-damped bearing bracket part (7) on the bearing side.

## Revendications

1. Moteur électrique silencieux, notamment moteur à collecteur, comportant au moins un étrier (3; 4 ou 6 ; 7) de montage ou analogue entre un stator d'une part et un palier pour un rotor d'autre part, notamment un palier (2.1 ou 2.2) à calotte, l'étrier (3 ; 4 ou 6 ; 7) de montage étant divisé au moins en une première partie (3 ou 6) d'étrier, côté stator, et une deuxième partie (4 ou 7) d'étrier, côté palier, et la première partie (3 ou 6) d'étrier côté stator ainsi que la deuxième partie (4 ou 7) d'étrier côté palier étant réalisées à emboîtement mutuel par des régions (6.2; 6.3 ou 7.2; 7.3) respectives évidées en forme de pot, avec intercalation et application mutuelle d'un élément (5 ou 8) insonorisant, et avec assemblage mutuel par encliquetage, notamment par des crochets (6.1) d'enclenchement périphériques.

2. Moteur électrique silencieux suivant la revendication précédente, la première partie (3 ou 6) d'étrier côté stator engageant en recouvrement au moins partiellement, radialement et axialement à l'extérieur, la deuxième partie (4 ou 7) d'étrier côté palier.

3. Moteur électrique silencieux suivant au moins l'une des revendications précédentes, l'élément (5 ou 8) insonorisant étant réuni à la première partie (3 ou 6) d'étrier côté stator en une unité de construction pouvant être préfabriquée.

4. Moteur électrique silencieux suivant au moins l'une des revendications précédentes, comportant une première partie (3 ou 6) d'étrier côté stator en matière plastique et/ou une deuxième partie (4 ou 7) d'étrier côté palier en métal.

5. Moteur électrique silencieux suivant au moins l'une des revendications précédentes, comportant des éléments (5 ou 8) insonorisants en élastomère, notamment en caoutchouc naturel, en silicone ou en polymère d'éthylène.

6. Moteur électrique silencieux suivant au moins l'une des revendications précédentes, comportant un assemblage par agrafage ou encliquetage entre la première partie (3 ou 6) d'étrier côté stator ou, respectivement, la deuxième partie (4 ou 7) d'étrier côté palier et l'élément (5 ou 8) insonorisant.

7. Moteur électrique silencieux suivant au moins l'une des revendications précédentes, comportant un assemblage collé entre la première partie (3 ou 6) d'étrier côté stator ou, respectivement, la deuxième partie (4 ou 7) d'étrier côté palier et l'élément (5 ou 8) insonorisant.

8. Moteur électrique silencieux suivant au moins l'une des revendications précédentes, comportant un assemblage vulcanisé entre la première partie (3 ou 6) d'étrier côté stator ou, respectivement, la deuxième partie (4 ou 7) d'étrier côté palier et l'élément (5 ou 8) insonorisant.

9. Moteur électrique silencieux suivant au moins l'une des revendications précédentes, comportant un logement des balais (B1, B2) de charbon dans la région d'une deuxième partie (7) d'étrier côté palier, insonorisée.

10. Moteur électrique silencieux suivant la revendication précédente, comportant un logement des balais (B1, B2) de charbon au moyen de porte-balais en marteau dans la région de la deuxième partie (7) d'étrier côté palier, insonorisée.
